# EUROPEAN PATENT APPLICATION

(11) **EP 4 403 398 A1**
(43) Date of publication of application: **24.07.2024**
(21) Application number: 22869170.5
(22) Date of filing: 13.09.2022
(51) Int. Cl.: B60L 1/00

(54) **POWER ALLOCATION METHOD AND APPARATUS, AND ELECTRIC VEHICLE**

(30) Priority: 16.09.2021 CN 202111087580
(71) Applicant: Beijing CHJ Information Technology Co., Ltd., Beijing 101399 (CN)
(72) Inventor: LI, Renxia, Beijing 101399 (CN)
(74) Representative: advotec.
(86) International application number: PCT/CN2022/118329
(87) International publication number: WO 2023/040801

(57) **Abstract**

Provided is a power allocation method, comprising: receiving power requests sent by a plurality of power consumption devices, each power request comprising initial request power, and the initial request power being a power value currently and actually requested by the corresponding device (201); determining final request power corresponding to each of the plurality of power consumption devices according to an execution power deviation value and the initial request power corresponding to each of the plurality of power consumption devices, the execution power deviation value being used for measuring a historical deviation condition between actual request power and actual execution power of the corresponding power consumption device (202); and determining, according to the power currently available to a power supply system and the final request power corresponding to each of the plurality of power consumption devices, allocated power corresponding to each of the plurality of power consumption devices (203).

## Description

### CROSS REFERENCE TO THE RELATED ART

This application is filed on and claims priority to Chinese Patent Application No. 202111087580.9, filed September 16, 2021, the entire contents of which are hereby incorporated herein by reference.

### TECHNICAL FIELD

The present disclosure relates to a field of electronic computing, and in particular to a method and apparatus for power allocation, and an electric vehicle.

### BACKGROUND

A power allocation issue is encountered in many application scenarios, for example, during electric vehicle usage, an air conditioning compressor sends a power request when there is a need for refrigeration, a heater sends a power request when there is a need for heating, and power is distributed according to these requests.

In conventional solutions, the power request sent by each electric device is allocated according to available power of the power supply system. If the available power of the power supply system is greater than or equal to a sum of the power requests sent by the respective electric devices, the allocation is performed according to the requested power of the respective electric devices. If the available power of the power supply system is less than the sum of the power requests sent by the respective electric devices, the power is gradually allocated to the respective electric devices according to their priority.

Since the power supply system will allocate the power to respective electric devices according to the requested power, issues such as unreasonable power allocation may arise when the actual requested power of the electric device is greater than actual operating power.

### SUMMARY

Embodiments of the present disclosure provide a method, apparatus, and device for power allocation that enables reasonable power allocation by a plurality of electric device devices during the power allocation process.

In a first aspect, embodiments of the present disclosure provide a method for power allocation. The method includes:
receiving a power request sent by each of a plurality of electric devices, in which the power request includes initial requested power that is an actual power value currently requested by a corresponding device;
determining final requested power corresponding to each of the plurality of electric devices according to the initial requested power and an operating power deviation value corresponding to each of the plurality of electric devices, in which the operating power deviation value is configured to measure a historical deviation of actual requested power from actual operating power of the corresponding electric device; and
determining allocated power corresponding to each of the plurality of electric devices according to current available power of a power supply system and the final requested power corresponding to each of the plurality of electric devices.

In a second aspect, embodiments of the present disclosure provide an apparatus for power allocation. The apparatus includes:
a receiving module, configured to receive a power request sent by each of a plurality of electric devices, in which the power request includes initial requested power that is an actual power value currently requested by a corresponding device;
a first determining module, configured to determine final requested power corresponding to each of the plurality of electric devices according to the initial requested power and an operating power deviation value corresponding to each of the plurality of electric devices, in which the operating power deviation value is configured to measure a historical deviation of actual requested power from actual operating power of the corresponding electric device; and
a second determining module, configured to determine allocated power corresponding to each of the plurality of electric devices according to current available power of a power supply system and the final requested power corresponding to each of the plurality of electric devices.

In a third aspect, embodiments of the present disclosure provide an electric vehicle. The electric vehicle includes a controller, a plurality of electric device, a power supply system that includes a battery. The controller is configured to perform the method for power allocation of the first aspect described above.

In a fourth aspect, embodiments of the present disclosure provide an electronic device. The device includes: at least one processor; and a memory communicatively coupled with the at least one processor. The memory stores instructions executable by the at least one processor. The instructions, when being executed by the at least one processor, enable the at least one processor to perform the method for power allocation of the first aspect described above.

In a fifth aspect, embodiments of the disclosure provide a non-transitory computer-readable storage medium having stored thereon computer instructions. The computer instructions are configured to cause a computer to perform the method for power allocation of the first aspect described above.

In a sixth aspect, embodiments of the present disclosure provide a computer program product including a computer program which, when executed by a processor, implements the method for power allocation of the first aspect described above.

In solutions provided by the embodiments of the present disclosure, first the power request sent by each of the plurality of electric devices is received, then the final requested power corresponding to each of the plurality of electric devices is obtained by adding the initial requested power sent by each of the plurality of electric devices with the operating power deviation value corresponding to each of the plurality of electric devices, and finally the allocated power corresponding to each of the plurality of electric devices is determined according to the current available power of the power supply system and the final requested power corresponding to each of the plurality of electric devices. The operating power deviation value is configured to measure the historical deviation of the actual requested power from the actual operating power of the corresponding electric device. In the process of power allocation, the operating power deviations of the respective electric devices during operation are taken into account, and the operating power deviation value is added into the final requested power, meaning that a portion of the power is reserved, so that even if the actual operation power of each electric device is larger than its initial requested power, the problem of unreasonable allocation of the plurality of electric devices in the process of power allocation can be avoided, because a portion has been reserved.

### BRIEF DESCRIPTION OF THE DRAWINGS

The drawings are described in order to more clearly illustrate technical solutions in embodiments of the present disclosure, the accompanying drawings used in the description of the embodiments will be briefly described below. It will be apparent that the drawings in the following description are some embodiments of the present disclosure, and that other drawings can be derived from these drawings without inventive step for a person of ordinary skill in the art.
FIG. 1 is a schematic diagram of a power allocation operation scenario according to an embodiment of the present disclosure.
FIG. 2 is a flowchart of a method for power allocation according to an embodiment of the present disclosure.
FIG. 3 is a flowchart of a method for power allocation according to an embodiment of the present disclosure.
FIG. 4 is a block diagram of an apparatus for power allocation according to an embodiment of the present disclosure.
FIG. 5 is a block diagram of an electric vehicle according to an embodiment of the present disclosure.

### DETAILED DESCRIPTION

In order to make the objects, solutions and advantages of embodiments of the present disclosure more clear, complete description of the embodiments of the present disclosure will now be made in conjunction with the accompanying drawings in the embodiments of the present disclosure. It is apparent that the embodiments described are part of, but not all of, embodiments of the present disclosure. Based on the embodiments in the present disclosure, all other embodiments obtained by a person of ordinary skill in the art without making inventive effort are within the scope of protection of the present disclosure.

In addition, the sequence of steps in each of method embodiments described below is merely exemplary and not strictly limiting.

A power allocation issue is encountered in many application scenarios. When a power request is sent by an electric device, the power supply system typically allocates according to requested power, which may result in overcharge and overdischarge phenomenons of a battery. The overcharge means that charging power of the battery in the power supply system exceeds maximum charge power allowed by the battery. Overdischarge means that discharging power of the battery in the power supply system exceeds maximum discharge power allowed by the battery. To avoid the occurrence of these phenomenons, solutions presented by embodiments of the present disclosure are provided.

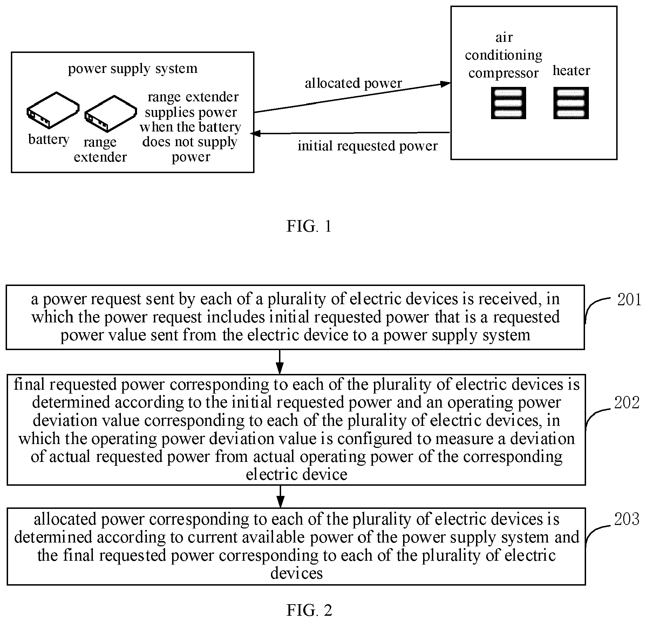

For ease of understanding, an example of an application scenario of power allocation in an electric vehicle is exemplified in connection with Fig. 1. In Fig. 1, the electric vehicle includes devices such as an air conditioning compressor and a heater, which are powered by a power supply system including a battery and a range extender. Furthermore, the power supply system in the electric vehicle can control the power allocation for the air conditioning compressor, the heater and other devices. When the air conditioning compressor sends a power request to the power supply system, assuming the requested power of the air conditioning compressor is 10kw and current maximum available power allowed by the battery of the power supply system is 10 kw, the power that can then be allocated to the air conditioning compressor is 10 kw. However, the air conditioning compressor eventually operates 11 kw, i.e., using 1 kw more by the air conditioning compressor. At this point, total power discharged from the battery is 11 kw and the discharge power of the battery exceeds the maximum discharge power allowed by the battery, i.e., 1 kw overdischarge of the battery, and thus the overdischarge phenomenon of the battery occurs. In summary, the overdischarge phenomenon of the battery occurs when the discharge power of the battery exceeds the maximum discharge power allowed by the battery. Likewise, when the air conditioning compressor sends a power request to the power supply system, assuming that the requested power of the air conditioning compressor is 10kw and current maximum chargeable power and maximum dischargeable power of the battery are both 0 kw, the air conditioning compressor is powered by the range extender, which allocates 10 kw of power to the air conditioning compressor since the requested power of the air conditioning compressor is 10 kw. However, the air conditioning compressor eventually only operates 9 kw, then 1 kw more power allocated from the range extender charges the battery, which results in overcharge of the battery since the chargeable power of the battery is 0 kw at this time. That is, a battery overcharge phenomenon occurs when the charging power of the battery is greater than the maximum charge power allowed by the battery.

Fig. 2 is a flowchart of a method for power allocation according to an embodiment of the present disclosure. As shown in Fig. 2, the method may include the following steps.

Step 201, a power request sent by each of a plurality of electric devices is received, in which the power request includes initial requested power that is a requested power value sent from the electric device to a power supply system.

Step 202, final requested power corresponding to each of the plurality of electric devices is determined according to the initial requested power and an operating power deviation value corresponding to each of the plurality of electric devices, in which the operating power deviation value is configured to measure a deviation of actual requested power from actual operating power of the corresponding electric device.

Step 203, allocated power corresponding to each of the plurality of electric devices is determined according to current available power of the power supply system and the final requested power corresponding to each of the plurality of electric devices.

In the embodiment of the present disclosure, the plurality of electric devices may be different in different application scenarios. For example, a plurality of electric devices in an electric vehicle include any device that requires external power supply, such as an air conditioning compressor, a heater, and the like. A plurality of electric device devices in a driving car may be electronic devices, such as an audio device and the like. The purpose of reasonable power allocation to the plurality of electric devices may be, for example, to avoid damage to the power supply system caused by battery overcharge, overdischarge.

When the plurality of electric devices have power requests, the initial requested power is first sent to the power supply system, and the power supply system then determines the final power that can be allocated for each electric device, according to the initial requested power corresponding to each of the plurality of electric devices and the operating power deviation value corresponding to each electric device and the current available power of the power supply system.

In the embodiment of the present disclosure, rather than directly using the initial requested power corresponding to each of the plurality of electric devices as a basis for the final allocated power for the plurality of electric devices, the final requested power corresponding to each of the plurality of electric devices is used as a basis for the final allocated power. Using the final requested power as a basis for the final allocated power means that the operating power deviation of the plurality of electric devices is taking into account during the allocation. The operating power deviation value is used to measure the deviation of the actual requested power from the actual operating power of the corresponding electric device.

In particular, when the plurality of electric devices have power requests, they send power requests to the power supply system, the power requests initially sent by the plurality of electric devices to the power supply system are referred to as initial requested power. Upon receipt of the requests by the power supply system, a final requested power corresponding to each of the plurality of electric devices is first determined according to the initial requested power and the operating power deviation value corresponding to each of the plurality of electric devices, and then the allocated power corresponding to each of the plurality of electric devices is determined according to the final requested power corresponding to each of the plurality of electric devices and the current available power of the power supply system.

The operating power deviation refers to a deviation that exists between the final actual operating power and the actual requested power in the operating process of the electric device. The operating power deviation in the operating process cannot be completely avoided, and can only be as precise as possible.

In the embodiment of the present disclosure, in the process of determining the operating power deviation corresponding to each of the plurality of electric devices, actual requested power and actual operating power corresponding to each of the plurality of electric devices in a set historical time may be obtained first; then, the operating power deviation value corresponding to each of the plurality of electric devices is determined according to the actual requested power and the actual operating power corresponding to each of the plurality of electric devices.

In practical applications, the operating power deviation values corresponding to respective electric devices are generally derived in advance from data analysis of the actual requested power and the actual operating power of the respective electric device in the set historical time. The historical time may be a past period of time, such as one month, two months, half years, etc., without specific limitation. Data of actual requested power and actual operating power of the plurality of electric devices in a past period of time is collected, and a working environment and the like of the plurality of electric device devices is collected. The collected data of the actual requested power and the actual operating power of the plurality of electric devices is analyzed to obtain a deviation trend existed between the actual requested power and the actual operating power corresponding to each of the plurality of electric devices, and the operating power deviation value corresponding to each of the plurality of electric devices can be determined. The determined operating power deviation value is a value greater than or equal to zero. When the actual requested power of the electric device is always higher than the actual operating power, then the operating power deviation value is 0. For ease of understanding, by exemplifying the air conditioning compressor in the electric vehicle, it is found from the collected data that the actual requested power value of the air conditioning compressor in the past set historical time may always be higher than the actual operating power value, for which case it may be determined that the operating power deviation value of the air conditioning compressor is 0.

That is, when an electric device sends a power request, the operating power deviation value of the electric device is a value that has been determined. Upon receipt of the initial requested power sent by the plurality of electric devices by the power supply system, the final requested power corresponding to each of the plurality of electric devices is determined according to the operating power deviation value and the initial requested power corresponding to each of the plurality of electric devices. Optionally, the determination of the final requested power of the plurality of electric devices may include obtaining the final requested power corresponding to each of the plurality of electric devices by adding the initial requested power corresponding to each of the plurality of electric devices to the operating power deviation value corresponding to each of the plurality of electric devices. The final requested power is greater than the initial requested power, i.e., reserving a portion of the power, which prevents battery overcharging during operation.

Then, the allocated power corresponding to each of the plurality of electric devices is determined according to the final requested power corresponding to each of the plurality of electric devices and the current available power of the power supply system.

In general terms, the process of determining the allocated power corresponding to each of the plurality of electric devices may include: determining the power that can be allocated for the respective electric devices according to whether a battery of the power supply system is currently in a charging state, maximum allowable charging power of the battery and the final requested power of the plurality of electric devices.

During operation, the battery of the power supply system may be in two states, i.e., the battery is in a charging state or in an uncharged state. By determining whether the battery of the power supply system is currently in the charging state, the maximum allowable charging power of the battery and the final requested power of the plurality of electric devices, determining the power that can be allocated for each electric device can be specifically implemented as:

when the battery is in an uncharged state, determining the allocated power corresponding to each of the plurality of electric devices according to the current available power of the power supply system and the final requested power corresponding to each of the plurality of electric devices. However, when the battery is in a charging state, the situation is complex, because the maximum charge power of the battery also affects whether or not to perform power allocation for each electric device. Therefore, when the battery is in the charging state, it is also necessary to determine a relation of the maximum allowable charging power of the battery to the operating power deviation values of the plurality of electric devices. In particular, when the battery is in the charging state and the maximum allowable charging power of the battery is greater than or equal to a sum of the operating power deviation values of the plurality of electric devices, the allocated power corresponding to each of the plurality of electric devices is determined according to the current available power of the power supply system and the final requested power corresponding to each of the plurality of electric devices. When the battery is in the charging state and the maximum allowable charging power of the battery is less than the sum of the operating power deviation values of the plurality of electric devices, the use of the plurality of electric devices is prohibited.

In practical applications, using whether or not a battery is in the charging state as a precondition of the power allocation for the plurality of electric devices can effectively avoid the occurrence of the battery overcharge phenomenon when the battery is in the charging state; and can effectively avoid the occurrence of the battery overdischarge phenomenon when the battery is in the uncharged state. In practical applications, when the battery is in the charging state, the battery is overcharged primarily due to the current charging power of the battery being greater than the maximum allowable charging power of the battery. Thus, when allocating power for the plurality of electric devices in a case that the battery is in the charging state, in addition to taking account of whether the battery is in the charging state or in an uncharged state, the maximum allowable charging power of the battery at that time is also taken into account.

For example, assuming that the battery in the present power supply system is in the uncharged state, determining the allocated power corresponding to each of the plurality of electric devices according to the current available power of the power supply system and the final requested power corresponding to each of the plurality of electric devices, may specifically be implemented as: first determining a magnitude relationship between the current available power of the power supply system and total final requested power of the plurality of electric devices, and then determining the power that can be allocated for each of the plurality of electric devices based on the determination result. If the current available power of the powering system is greater than or equal to the total final requested power of the plurality of electric devices, the initial requested power of each of the plurality of electric devices is used as the allocated power for the plurality of electric devices. If the current available power of the current powering system is less than the total final requested power of the plurality of electric devices, power allocation is performed for the plurality of electric devices according to priorities of the plurality of electric devices and respective initial requested power, final requested power and operating power deviation values of the plurality of electric devices.

When the battery is in the uncharged state and the current available power of the power supply system is sufficient, the final allocated power is the initial requested power of the electric device, since the final requested power is based on the initial requested power plus the operating power deviation value, namely reserving a portion of the power in advance, so that even if the actual operating power of the electric device is more than the initially requested power during operation, the battery will not be overdischarged due to the electric device using more power.

Furthermore, in practical applications, the battery of the power supply system may also be in the charging state, the use of the plurality of electric devices is inhibited when the battery of the power supply system is in the charging state and the maximum allowable charging power of the battery is less than the sum of the operating power deviation values of the plurality of electric devices. When the battery is in the charging state and the maximum allowable charging power of the battery is greater than or equal to the sum of the operating power deviation values of the plurality of electric devices, and the current available power of the power supply system is greater than or equal to the total final requested power of the plurality of electric devices, the initial requested power of each of the plurality of electric devices is used as the allocated power for the plurality of electric devices. When the current available power of the power supply system is less than the total final requested power of the plurality of electric devices, power is allocated to the plurality of electric devices according to the priorities of the plurality of electric devices and their respective initial requested power, final requested power and operating power deviation values.

Assuming that when the plurality of electric devices make power requests, at this point they are currently powered by other power-supply electric devices in the power supply system, and the actual operating power of the plurality of electric devices at this point is less than the allocated initial requested power, the other power-supply electric devices charge the battery with the excess portion of power and overcharge phenomenon occurs when the maximum allowable charging power of the battery is less than the sum of the operating power deviations of the plurality of electric devices. Therefore, when the battery is in the charging state and the maximum allowable charging power of the battery is less than the sum of the operating power deviation values of the plurality of electric devices, the use of the plurality of electric devices must be prohibited, which can effectively avoid overcharging the battery.

In summary, in power allocation for the plurality of electric devices, the power deviation of each electric device in operation is taken into account, the operating power deviation value is reserved and the occurrence of battery overcharge and overdischarge phenomenons caused by the operating power deviations of the plurality of electric devices is avoided.

In practical applications, many application areas involve the problem of power allocation to a plurality of electric device devices, and the solution of the embodiments of the present disclosure can be used. The following will illustrate with reference to several embodiments.

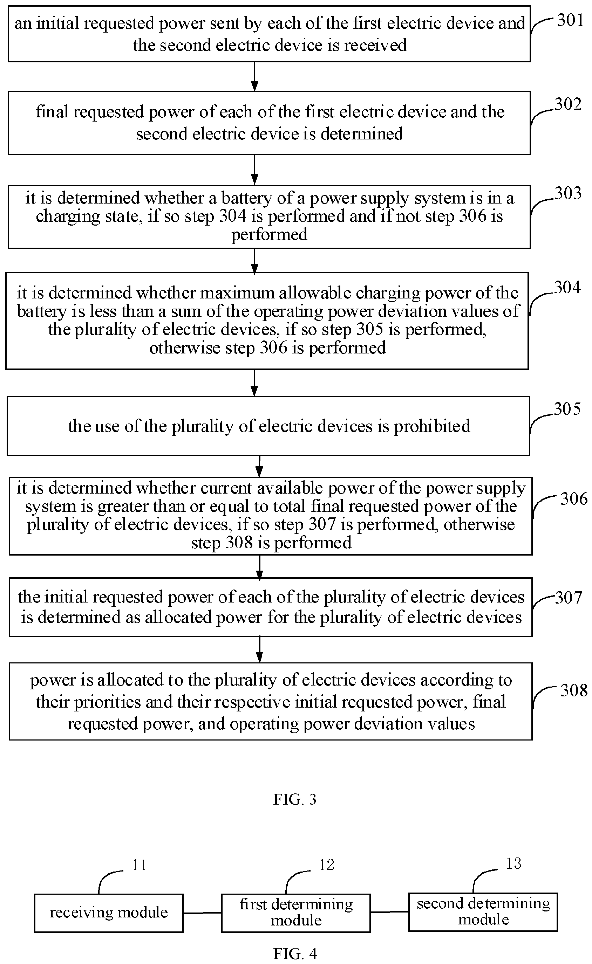

In the above embodiments, in the process of power allocation of the plurality of electric devices, the power allocation of the plurality of electric devices can be performed if the battery is in the uncharged state, or alternatively, that the battery is in the charging state and that the maximum allowable charging power of the battery is greater than or equal to the sum of the operating power deviation values of the plurality of electric devices. However, the priorities of the plurality of electric devices may also affect the power allocation of the plurality of electric devices. This situation may be exemplarily illustrated in combination with a method for power allocation shown in FIG. 3 below.

Fig. 3 is a flowchart of another method for power allocation according to an embodiment of the present disclosure. The plurality of electric devices includes a first electric device and a second electric device, and a priority of the first electric device is higher than a priority of the second electric device. As shown in figure 3, the method includes the following steps.

Step 301, an initial requested power sent by each of the first electric device and the second electric device is received.

Step 302, final requested power of each of the first electric device and the second electric device is determined.

Step 303, it is determined whether a battery of a power supply system is in a charging state, if so step 304 is performed and if not step 306 is performed.

Step 304, it is determined whether maximum allowable charging power of the battery is less than a sum of the operating power deviation values of the plurality of electric devices, if so step 305 is performed, otherwise step 306 is performed.

Step 305, the use of the plurality of electric devices is prohibited.

Step 306, it is determined whether current available power of the power supply system is greater than or equal to total final requested power of the plurality of electric devices, if so step 307 is performed, otherwise step 308 is performed.

Step 307, the initial requested power of each of the plurality of electric devices is determined as allocated power for the plurality of electric devices.

Step 308, power is allocated to the plurality of electric devices according to their priorities and their respective initial requested power, final requested power, and operating power deviation values.

Allocating power to the plurality of electric devices according to their priorities and their respective initial requested powers may specifically be implemented as:

Determining a magnitude relationship of the current available power of the power supply system and the final requested power of the first electric device. If the current available power of the power supply system is greater than the final requested power of the first electric device, allocated power for the first electric device is determined to be the initial requested power of the first electric device, then a difference between the current available power of the power supply system and the final requested power of the first electric device and operating power deviation value of the second electric device is determined, then allocated power for the second electric device is determined to be the difference. If the current available power of the power supply system is less than or equal to the final requested power of the first electric device, a difference between the current available power of the power supply system and an operating power deviation value of the first electric device is determined, allocated power for the first electric device is determined to be the difference, and at the same time the allocated power for the second electric device is determined to be zero.

Relevant content not described in the embodiment can be referred to in the relevant description of the preceding embodiments, which is not repeated here.

For ease of understanding, the allocation process of the plurality of electric devices with different priorities is exemplarily described in combination with an application scenario.

Assuming that the plurality of electric devices includes an air conditioning compressor and a heater, and that the allocation of power to the air conditioning compressor is priority to the heater. When both the air conditioning compressor and the heater have power requests, and respectively send the initial requested power to the power supply system. The power supply system receives the initial requested power of the air conditioning compressor and the heater, and adds the respective initial requested power with the corresponding operating power deviations to obtain the final requested power of the air conditioning compressor and the final requested power of the heater. Before performing the power allocation operation, the state at which the battery of the power supply system is in is determined. If the battery of the power supply system is in the charging state and the maximum allowable charging power of the battery is less than the sum of the operating power deviation values of the plurality of electric devices, the use of the air conditioning compressor and the heater is prohibited. If the battery is in the uncharged state, or, the battery is in the charging state and the maximum allowable charging power of the battery is greater than or equal to the sum of the operating power deviation values of the air conditioning compressor and the heater, then the magnitude relationship between the current available power of the power supply system and the total final requested power of the air conditioning compressor and the heater is determined. If the current available power of the power supply system is greater than or equal to the total final requested power of the air conditioning compressor and the heater, the air conditioning compressor is allocated with power according to the initial requested power of the air conditioning compressor, and the air conditioning compressor is allocated with power according to the initial requested power of the heater. If the current available power of the power supply system is less than the total final requested power of the air conditioning compressor and the heater, then a magnitude relation between the current available power of the power supply system and the final requested power of the air conditioning compressor is determined. If current available power of the power supply system is more than the final requested power of the air conditioning compressor, the allocated power for the air conditioning compressor is determined to be the initial requested power of the air conditioning compressor. The difference between the current available power of the power supply system and the final requested power of the air conditioning compressor and the operating power deviation value of the heater is determined, and finally the allocated power for the heater is determined according to the difference. Optionally, a specific method for determining the allocated power for the heating according to the difference may include: determining the allocated power for the heater to be max (0, the current available power of the power supply system - the final requested power of the air conditioning compressor - the operating power deviation value of the heater) according to the difference of current available power of the power supply system - the final requested power of the air conditioning compressor - the operating power deviation value of the heater; if the current available power of the power supply system is less than or equal to the final requested power of the air conditioning compressor, the heating is disabled and the allocated power for the air conditioning compressor is max (0, the current available power of the power supply system - the operating power deviation value of the air conditioning compressor). The max (A, B) is expressed as taking the maximum of both A and B.

That is, when the difference between the current available power of the power supply system and the final requested power of the air conditioning compressor and the operating power deviation value of the heater is less than 0, the use of the heater is prohibited, and when the difference is greater than 0, the allocation is performed according to the difference. When the difference between the current available power of the power supply system and the operating power deviation value of the air conditioning compressor is less than 0, the use of the air conditioning compressor is prohibited, and when the difference is greater than 0, the air conditioning compressor is power allocated according to the difference.

An apparatus for power allocation device of one or more embodiments of the present disclosure will be described in detail below. Those skilled in the art will appreciate that these apparatuses can be constructed using commercially available hardware components configured through the steps taught by the present solution.

Fig. 4 is a block diagram of an apparatus for power allocation according to an embodiment of the present disclosure. As shown in Fig. 4, the apparatus includes a receiving module 11, a first determining module 12 and a second determining module 13.

The receiving module 11 is configured to receive a power request sent by each of a plurality of electric devices. The power request includes an initial requested power, and the initial requested power is a requested power value sent by the electric device to the power supply system.

The first determining module 12 is configured to determine final requested power corresponding to each of the plurality of electric devices according to the initial requested power and an operating power deviation value corresponding to each of the plurality of electric devices. The operating power deviation value is configured to measure a deviation of an actual requested power from an actual operating power of the corresponding electric device.

The second determining module 13 is configured to determine allocated power corresponding to each of the plurality of electric devices according to current available power of a power supply system and the final requested power corresponding to each of the plurality of electric devices.

Optionally, the first determination module 12 is specifically configured to: obtain actual requested power and actual operating power respectively corresponding to each electric device in the vehicle in a set historical time; determine the operating power deviation value corresponding to each of the plurality of electric devices according to the actual requested power and the actual operating power respectively corresponding to each of the plurality of electric devices.

Optionally, the second determining module 13 is specifically configured to: when the battery is in an uncharged state, or the battery is in a charging state and maximum allowable charging power of the battery is greater than or equal to a sum of the operating power deviation values of the plurality of electric devices, determine the allocated power corresponding to each of the plurality of electric devices according to the current available power of the power supply system and the final requested power corresponding to each of the plurality of electric devices.

Optionally, the second determining module 13 is specifically configured to: when the battery is in the charging state and the maximum allowable charging power of the battery is less than the sum of the operating power deviation values of the plurality of electric devices, prohibit the use of the plurality of electric devices.

Optionally, the second determination module 13 is specifically configured to: when the current available power of the power supply system is greater than or equal to a sum of the final requested power of the plurality of electric devices, determine the initial requested power of each of the plurality of electric devices to be the allocated power corresponding to each of the plurality of electric devices.

Optionally, the second determining module 13 is specifically configured to: when the current available power of the power supply system is less than a sum of the final requested power of the plurality of electric devices, allocate power to the plurality of electric devices according to priorities of the plurality of electric devices and respective initial requested power, final requested power and operating power deviation values of the plurality of electric devices.

Optionally, the second determining module 13 is specifically configured to: the plurality of electric devices includes a first electric device and a second electric device, a priority of the first electric device is higher than a priority of the second electric device, determine allocated power for the first electric device to be initial requested power of the first electric device when the current available power of the power supply system is greater than final requested power of the first electric device; determine a difference between the current available power of the power supply system and the final requested power of the first electric device and operating power deviation value of the second electric device; and determine allocated power for the second electric device to be the difference.

Optionally, the second determining module 13 is further configured to: the plurality of electric devices includes a first electric device and a second electric device, a priority of the first electric device is higher than a priority of the second electric device, determine a difference between the current available power of the power supply system and an operating power deviation value of the first electric device when the current available power of the power supply system is less than or equal to final requested power of the first electric device; determine allocated power for the first electric device to be the difference; and determine allocated power for the second electric device to be zero.

The apparatus shown in Fig. 4 can perform the method for power allocation provided in the foregoing embodiments. For the detailed execution process and technical effects, refer to the descriptions in the foregoing embodiments, and details are not repeated here.

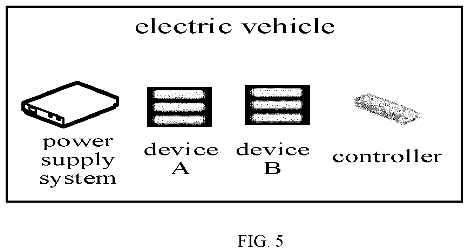

In one possible design, the structure of the apparatus for power allocation shown in Fig. 4 described above may be implemented as an electric vehicle. As shown in Fig. 5, the electric vehicle may include a controller, a plurality of devices, and a power supply system. The power supply system includes a battery. The controller may implement at least the method for power allocation as provided in the previous embodiments.

Embodiments of the present disclosure also provide an electronic device. The device includes: at least one processor; and a memory communicatively coupled with the at least one processor. The memory stores instructions executable by the at least one processor. The instructions, when being executed by the at least one processor, enable the at least one processor to perform the method for power allocation described above.

Embodiments of the disclosure also provide a non-transitory computer-readable storage medium having stored thereon computer instructions. The computer instructions are configured to cause a computer to perform the method for power allocation described above.

Embodiments of the present disclosure also provide a computer program product including a computer program which, when executed by a processor, implements the method for power allocation described above.

The apparatus embodiments described above are merely illustrative, in which units described as separate components may or may not be physically separated. Part or all of the modules can be selected according to actual needs to achieve the purpose of the solution of this embodiment. It can be understood and implemented by those skilled in the art without any creative efforts.

From the description of the embodiments above, it will be clear to those skilled in the art that the embodiments can be realized by means of a necessary general purpose hardware platform, but of course also by means of a combination of hardware and software. Based on such understanding, parts of the above-described technical solution, essentially or otherwise contributing to the state of the art, may be embodied in the form of a computer product, the present disclosure may take the form of a computer program product embodied on one or more computer usable storage media (including but is not limited to disc storage, CD-ROM, optical storage, etc.) having computer usable program codes.

Finally, it should be described that the above embodiments are merely illustrative of the technical solutions of the present disclosure, without limiting them; although the present disclosure has been described in detail with reference to the foregoing embodiments, it should be understood by those skilled in the art that the technical solutions described in the foregoing embodiments may be modified or equivalents may be substituted for some of the technical features thereof; such modifications and substitutions do not necessarily depart from the spirit and scope of embodiments of the present disclosure.

## Claims

1. A method for power allocation, comprising:
receiving a power request sent by each of a plurality of electric devices, wherein the power request comprises initial requested power that is an actual power value currently requested by a corresponding device;
determining final requested power corresponding to each of the plurality of electric devices according to the initial requested power and an operating power deviation value corresponding to each of the plurality of electric devices, wherein the operating power deviation value is configured to measure a historical deviation of actual requested power from actual operating power of the corresponding electric device; and
determining allocated power corresponding to each of the plurality of electric devices according to current available power of a power supply system and the final requested power corresponding to each of the plurality of electric devices.

2. The method as claimed in claim 1, further comprising:
obtaining actual requested power and actual operating power respectively corresponding to each electric device in the vehicle in a set historical time; and
determining the operating power deviation value corresponding to each of the plurality of electric devices according to the actual requested power and the actual operating power respectively corresponding to each of the plurality of electric devices.

3. The method according to claim 1 or 2, wherein the power supply system comprises a battery; and determining the allocated power corresponding to each of the plurality of electric devices according to the current available power of the power supply system and the final requested power corresponding to each of the plurality of electric devices, comprises:
when the battery is in an uncharged state, or the battery is in a charging state and maximum allowable charging power of the battery is greater than or equal to a sum of the operating power deviation values of the plurality of electric devices, determining the allocated power corresponding to each of the plurality of electric devices according to the current available power of the power supply system and the final requested power corresponding to each of the plurality of electric devices.

4. The method according to claim 3, further comprising:
when the battery is in the charging state and the maximum allowable charging power of the battery is less than the sum of the operating power deviation values of the plurality of electric devices, prohibiting the use of the plurality of electric devices.

5. The method according to any one of claims 1 to 3, wherein determining the allocated power corresponding to each of the plurality of electric devices according to the current available power of the power supply system and the final requested power corresponding to each of the plurality of electric devices, comprises:
when the current available power of the power supply system is greater than or equal to a sum of the final requested power of the plurality of electric devices, determining the initial requested power of each of the plurality of electric devices to be the allocated power corresponding to each of the plurality of electric devices.

6. The method according to any one of claims 1 to 3, wherein determining the allocated power corresponding to each of the plurality of electric devices according to the current available power of a power supply system and the final requested power corresponding to each of the plurality of electric devices, comprises:
when the current available power of the power supply system is less than a sum of the final requested power of the plurality of electric devices, allocating power to the plurality of electric devices according to priorities of the plurality of electric devices and respective initial requested power, final requested power and operating power deviation values of the plurality of electric devices.

7. The method according to claim 6, wherein the plurality of electric devices comprises a first electric device and a second electric device, and a priority of the first electric device is higher than a priority of the second electric device; and
allocating power to the plurality of electric devices according to the priorities of the plurality of electric devices and the respective initial requested power, final requested power and operating power deviation values of the plurality of electric devices, comprises:
determining allocated power for the first electric device to be initial requested power of the first electric device when the current available power of the power supply system is greater than final requested power of the first electric device;
determining a difference between the current available power of the power supply system and the final requested power of the first electric device and operating power deviation value of the second electric device; and
determining allocated power for the second electric device to be the difference.

8. The method according to claim 6, wherein the plurality of electric devices comprises a first electric device and a second electric device, and a priority of the first electric device is higher than a priority of the second electric device;
allocating power to the plurality of electric devices according to the priorities of the plurality of electric devices and the respective initial requested power, final requested power and operating power deviation values of the plurality of electric devices, comprises:
determining a difference between the current available power of the power supply system and an operating power deviation value of the first electric device when the current available power of the power supply system is less than or equal to final requested power of the first electric device;
determining allocated power for the first electric device to be the difference; and
determining allocated power for the second electric device to be zero.

9. An apparatus for power allocation, comprising:
a receiving module, configured to receive a power request sent by each of a plurality of electric devices;
a first determining module, configured to determine final requested power corresponding to each of the plurality of electric devices according to the initial requested power and an operating power deviation value corresponding to each of the plurality of electric devices; and
a second determining module, configured to determine allocated power corresponding to each of the plurality of electric devices according to current available power of a power supply system and the final requested power corresponding to each of the plurality of electric devices.

10. The apparatus according to claim 9, wherein the power supply system comprises a battery, and the second determining module is further configured to:
when the battery is in an uncharged state, or the battery is in a charging state and maximum allowable charging power of the battery is greater than or equal to a sum of the operating power deviation values of the plurality of electric devices, determine the allocated power corresponding to each of the plurality of electric devices according to the current available power of the power supply system and the final requested power corresponding to each of the plurality of electric devices.

11. The apparatus according to claim 10, wherein the second determining module is further configured to:
when the battery is in the charging state and the maximum allowable charging power of the battery is less than the sum of the operating power deviation values of the plurality of electric devices, prohibit the use of the plurality of electric devices.

12. The apparatus according to claim 9 or 10, wherein the second determining module is further configured to:
when the current available power of the power supply system is greater than or equal to a sum of the final requested power of the plurality of electric devices, determine the initial requested power of each of the plurality of electric devices to be the allocated power corresponding to each of the plurality of electric devices;
when the current available power of the power supply system is less than the sum of the final requested power of the plurality of electric devices, allocate power to the plurality of electric devices according to priorities of the plurality of electric devices and respective initial requested power, final requested power and operating power deviation values of the plurality of electric devices.

13. The apparatus according to claim 12, wherein the plurality of electric devices comprises a first electric device and a second electric device, and a priority of the first electric device is higher than a priority of the second electric device,
wherein the second determining module is further configured to:
determine allocated power for the first electric device to be initial requested power of the first electric device when the current available power of the power supply system is greater than final requested power of the first electric device; and
determine a difference between the current available power of the power supply system and the final requested power of the first electric device and operating power deviation value of the second electric device; and
determine allocated power for the second electric device to be the difference.

14. The apparatus according to claim 12, wherein the plurality of electric devices comprises a first electric device and a second electric device, and a priority of the first electric device is higher than a priority of the second electric device,
wherein the second determining module is further configured to:
determine a difference between the current available power of the power supply system and an operating power deviation value of the first electric device when the current available power of the power supply system is less than or equal to final requested power of the first electric device;
determine allocated power for the first electric device to be the difference; and
determine allocated power for the second electric device to be zero.

15. An electric vehicle, comprising: a controller, a plurality of electric devices, a power supply system that comprises a battery; wherein the controller is configured to perform the method for power allocation of any one of claims 1 to 8.

16. An electronic device, comprising:
at least one processor; and
a memory communicatively coupled with the at least one processor; wherein
the memory stores instructions executable by the at least one processor, and the instructions, when being executed by the at least one processor, enable the at least one processor to perform the method for power allocation of any one of claims 1-8.

17. A non-transitory computer-readable storage medium having stored thereon computer instructions, wherein the computer instructions are configured to cause a computer to perform the method for power allocation of any one of claims 1-8.

18. A computer program product, comprising a computer program, wherein the computer program, when executed by a processor, implements the method for power allocation of any one of claims 1-8.
